(19) Europäisches Patentamt
European Patent Office
Office européen des brevets

(11) EP 0 465 649 B1

(12) EUROPEAN PATENT SPECIFICATION

(45) Date of publication and mention of the grant of the patent:
**26.03.1997 Bulletin 1997/13**

(21) Application number: **90902389.7**

(22) Date of filing: **26.01.1990**

(51) Int. Cl.$^6$: **B01D 69/12**, B01D 71/56

(86) International application number:
**PCT/JP90/00095**

(87) International publication number:
**WO 91/11250 (08.08.1991 Gazette 1991/18)**

# (54) COMPOSITE SEMIPERMEABLE MEMBRANE AND PRODUCTION THEREOF

SEMIPERMEABLE VERBUNDMEMBRAN UND DEREN HERSTELLUNG

MEMBRANE SEMI-PERMEABLE COMPOSITE ET SON PROCEDE DE PRODUCTION

(84) Designated Contracting States:
**CH DE FR GB LI NL**

(43) Date of publication of application:
**15.01.1992 Bulletin 1992/03**

(73) Proprietor: **TORAY INDUSTRIES, INC.**
**Tokyo 103 (JP)**

(72) Inventors:
- **SASAKI, Tatsuo**
  **Masaki-cho, Iyo-gun, Ehime 791-31 (JP)**
- **FUJIMAKI, Hideo**
  **Azuchi-cho, Gamo-gun, Shiga 521-13 (JP)**
- **UEMURA, Tadahiro,**
  **Room 502**
  **Yamashina -ku, Kyoto-shi, Kyoto 607 (JP)**

(74) Representative: **Coleiro, Raymond et al**
**MEWBURN ELLIS**
**York House**
**23 Kingsway**
**London WC2B 6HP (GB)**

(56) References cited:

| | |
|---|---|
| **EP-A- 0 217 212** | **EP-A- 0 313 354** |
| **JP-A- 2 078 428** | **JP-A- 5 824 303** |
| **JP-A-59 179 103** | **JP-A-59 179 111** |

Remarks:
The file contains technical information submitted after the application was filed and not included in this specification

EP 0 465 649 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.13.17/3.4

## Description

The present invention relates to a composite semipermeable membrane useful as a reverse osmosis membrane.

The reverse osmosis membranes industrially used for producing ultra-pure water for electronics industries, for producing fresh water from brine or sea water, for recovery of useful substances, and for recycling of waste water, and the like, include asymmetric membranes prepared from cellulose acetate, which are described in, for example, US-A-3133132 and US-A-3133137. However, with such cellulose acetate membranes, since an operation pressure of at least 30 kg/cm$^2$ (2940 kPa) is necessary, the cost for producing water in the field of production of ultra-pure water for electronics industries and production of fresh water from brine is unacceptably high. Further, they have problems in their resistance to hydrolysis and to microorganisms.

Studies for solving these problems were actively made mainly in the U.S. and in Japan, and materials such as aromatic polyamides, polyamide hydrazide (US-A-3567632), polyamide acid (JP-A-55-37282), cross-linked polyamide acid (JP-B-56-3769), polyimidazopyrrolone, polysulfoneamides, polybenzimidazole, polybenzimidazolone and polyarylene oxides, which improve certain of the properties of cellulose acetate have been provided. However, these materials are inferior to Loeb type cellulose acetate membranes in the selective separation ability and permeability.

On the other hand, as another type of semipermeable membrane different from the Loeb type membranes, composite semipermeable membranes having a microporous substrate and a ultra-thin membrane (active layer) controlling the membrane performance have been developed. The composite membranes have advantages in that best materials may be selected for each of the active layer and the microporous substrate, and that the water flux may be drastically increased by making the active layer thin. Up to now, composite semipermeable membranes having an active layer made of a cross-linked aramide, which exhibit higher salt rejection and water flux than those attained by the cellulose acetate membranes were provided (e.g. US-A-4277344 and US-A-4761234). However, although this type of membrane exhibit very high salt rejection, the resistance to chlorine which is widely used for sterilization that is very important in the processing is inferior to that of cellulose acetate membranes. In relatively large plants such as plants for production of ultra-pure water for electronics industries, and production of fresh water from brine or sea water, this drawback may be overcome by extensive pre-treatments, so that they are now becoming the main current of the reverse osmosis membranes. However, in the field of small equipment such as small ultra-pure water-producing machines and domestic water purifiers, in which tapped water containing chlorine is fed, and in the field wherein treatment with chlorine is indispensable, such as waste water treatments, the active layer is rapidly changed so that the salt rejection is reduced. Thus, the above-mentioned membranes cannot be employed or the cost for producing water is made high. Thus, it is necessary to develop a composite semipermeable membrane with the following characteristics:

i) Resistance to chlorine comparable to that of cellulose acetate membranes,
ii) Water permeability (high water flux) which enables their operation at low operation pressure (15 kg/cm$^2$ or less) (1470 kPa), and
iii) High salt rejection comparable to that of cellulose acetate membranes.

Studies were made recently for satisfying these characteristics Recently, as a membrane with chlorine resistance, a composite semipermeable membrane in which piperazine polyamide is used as the active layer was proposed and is now attracting attention (e.g. US-A-4259183, PB Report 80-127574 and PB Report 288387). This membrane has high chlorine resistance so that sterilization by continuous treatment with chlorine may be carried out, and has high water flux at low pressure. Composite membranes employing piperazine-based polyamides were further studied and reverse osmosis membranes with improved salt rejections and water flux were developed (e.g. JP-A-62-201606, US-A-4758343 and US-A-4857363). However, the rejection of salt (sodium chloride) by these membranes are not high. That is, the former membranes have salt rejections of about 50%, and the latter membranes have salt rejections of about 70 - 80%. Thus, although these membranes are suited for converting hard water to soft water, they have practical problems when used for rejecting salt. Especially, for the production of ultra-pure water, there are problems in this low salt rejection and the ability to reject organic components.

Studies were made for promoting the salt rejection of the reverse osmosis membranes employing the polypiperazine materials (JP-A-62-49909). With this membrane, the salt rejection was promoted to about 90% by improving the process of forming the membrane. However, the salt rejection is lower than that of cellulose acetate membranes which is about 95%, so that the salt rejection is still insufficient for salt rejecting uses.

On the other hand, as membranes with chlorine resistance, polyethylenediamide membranes were proposed (e.g. JP-A-58-24303, JP-A-59-26101 and PB Report 83-243170). Although these membranes show high salt rejections comparable to those of cellulose membranes, these membranes have low water permeabilities, so that an operation pressure of as high as 30 kg/cm$^2$ is required to attain an acceptable water flux. Thus, the performances of these membranes are not better than those of cellulose acetate membranes. Although copolymers containing piperazine and ethylenediamine were studied (JP-A-59-179103), the high salt rejection and the high water flux could not be simultaneously satisfied.

Finally, EP-A-0313354 discloses a membrane prepared by the interfacial polymerization of an amine component which is a mixture of a polyfunctional aliphatic primary amine (A) such as ethylenediamine with a polyfunctional secondary amine (B) such as piperazine preferably at an amine component composition of 0.0005 to 2 wt%, with an acid halide component (C) which is preferably trimesoyl chloride and preferably at a concentration of 0.05 to 1 wt%. The molar ratio of (A):(B) is <0.2:1. The membrane is capable of allowing the passage of no less than 50 to 60% sodium chloride and is suitable for treatment of effluent from a commercial yeast production process. Thus, this document does not address the problem of attaining a high salt rejection for producing ultra-pure water.

Accordingly, the present invention seeks to provide a high performance reverse osmosis membrane having high resistance to chlorine, sufficient water permeability even at a lower pressure, high salt rejection and separation performance, as well as a production process thereof.

We have intensively studied this problem and have found that in the composite semipermeable membrane having an ultra-thin membrane (active layer) including as a major constituent a copolyamide prepared by reacting piperazine and ethylenediamine as amine components with a bifunctional aromatic acid halide, by setting the ratio of the piperazine to ethylenediamine within a specific range and by adding a specific additive to the amine components, a reverse osmosis membrane with high salt rejection and high water flux may be prepared and the uniformity of the membrane performance is promoted.

That is, the present invention provides a composite semipermeable membrane comprising a microporous substrate and an ultra-thin membrane coated on said microporous substrate, the ultra-thin membrane comprising as a major constituent a polyamide prepared by polycondensation of piperazine and ethylenediamine with a bifunctional aromatic acid halide, the molar ratio of the ethylenediamine polyamide unit to the piperazine polyamide unit being not less than 0.01:1 and less than 0.25:1, the composite semipermeable membrane having a water flux of not less than 0.8 $m^3/m^2 \cdot day$ and not more than 1.8 $m^3/m^2 \cdot day$ at an operation pressure of 15 $kg/cm^2$ (1470 kPa) and a salt rejection for 0.05% by weight aqueous sodium chloride solution of not less than 90% and not more than 99%. The present invention also provides a process of producing the composite semipermeable membrane, comprising the steps of applying onto the microporous substrate an aqueous solution containing piperazine, ethylenediamine and a compound [I] of the formula [I], the aqueous solution containing 0.007 to 0.17 parts by weight of ethylenediamine per 1 part by weight of piperazine and not less than 0.01% and not more than 1.0%, by weight of the aqueous solution, of the compound [I]; and applying thereon an organic solvent solution containing as a major solute component the bifunctional aromatic acid halide, which organic solvent is immiscible with water, so as to allow an interfacial polycondensation reaction between the said amino compounds and the bifunctional aromatic acid halide; thereby forming said polyamide serving as an active layer. The compound [I] may be represented by

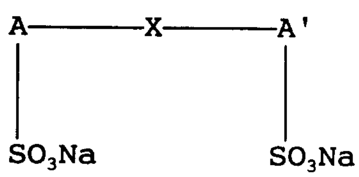

[I]

wherein each of A and A' represents a benzene or naphthalene ring which may have one or more alkyl group(s) and X represents -O- or $-CH_2-$.

The best mode for carrying out the invention will now be described.

In the composite semipermeable membrane of the present invention, the major constituent of the ultra-thin membrane (active layer) coating the microporous substrate is a copolymerized polyamide prepared by the polycondensation of piperazine and ethylenediamine with a bifunctional aromatic acid halide, that is, a copolymerized polyamide containing the repeating units of a polypiperazine amide of the formula [II] and of polyethylenediamine amide of the formula [III].

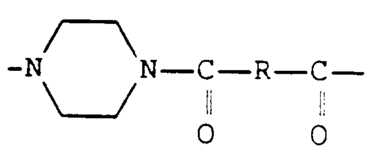

[II]

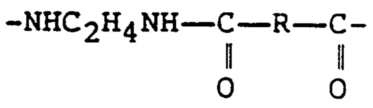

[III]

(wherein R represents a substituted or unsubstituted aromatic hydrocarbon).

To attain the object of the present invention, the molar ratio of the repeating unit of the formula [III] to the repeating unit of the formula [II] must be not less than 0.01 and less than 0.25.

If the molar ratio of the repeating unit of the formula [III] to the repeating unit of the formula [II] is less than 0.01:1, the water permeability is increased and the salt rejection is lowered. If the molar ratio of the repeating unit of the formula [III] to the repeating unit of the formula [II] is more than 0.25:1, the water permeability is decreased and the salt rejection is promoted.

In the present invention, the ultra-thin membrane (active layer) may be prepared by applying an aqueous solution containing piperazine and ethylenediamine on the microporous substrate, and then applying a solution containing the bifunctional aromatic acid halide, thereby allowing the interfacial polycondensation with the amino compounds. To increase the strength of the ultra-thin membrane and the insolubility in solvents, it is preferred to cross-link the polyamide by copolymerizing a not less than trifunctional acid halide.

The bifunctional acid halide has a substituted and/or unsubstituted aromatic ring and is preferably able to be bonded by an amide bond. The substituent on the aromatic ring and its position are not restricted, and it is usually preferred that the aromatic ring does not have a substituent. Examples of substituents which do not adversely affect the performance include lower alkyl groups such as methyl group and ethyl group, methoxy group, ethoxy group, sulfonic acid group, carboxyl group, halogens such as fluorine, chlorine, bromine and iodine and nitro group. Although the position of the substituent is not restricted, the positions with which the structure of the polymer is not three-dimensionally congested are preferred. Preferred examples of the bifunctional acid halide include terephthalic acid halide, isophthalic acid halide, naphthalenedicarboxylic acid halide, diphenyldicarboxylic acid halide, benzenedisulfonic acid halide and chlorosulfonylisophthalic acid halide.

In view of the performance of the composite reverse osmosis membrane, the bifunctional acid halide is more preferably terephthalic acid halide and/or isophthalic acid halide.

As mentioned before, to increase the strength and insolubility in solvents of the ultra-thin membrane, the ultra-thin membrane may preferably contain a cross-linked polyamide formed by virtue of an acid halide with tri- or greater functionality. Examples of the acid halide of tri- or greater functionality which may be used as a mixture with the bifunctional acid halide include multifunctional aromatic acid halide such as trimesoyl halide, benzophenone tetracarboxylic acid halide, trimellitic acid halide and pyromellitic acid halide. Among these, in view of the membrane performance and membrane-forming performance, trimesoyl halide is most preferred.

It is acceptable that one of the functional groups in the acid halide of tri- or greater functionality do not form amido bond and remain, for example, as carboxylic group.

The molar ratio of the acid halide of tri- or greater functionality to the bifunctional acid halide is preferably 0.1 - 1.0, more preferably 0.15 - 0.7.

The thickness of the ultra-thin membrane (active layer) formed by the interfacial polycondensation reaction between the above-described amines and the acid halide may be arbitrarily selected from the range of 5 - 1000 nm. However, if the thickness is too small, defects are likely formed and if it is too large, the water permeability is reduced. Thus, the thickness of the ultra-thin membrane may preferably be 10 - 300 nm.

The microporous substrate does not have a substantial separation capability and is employed for reinforcing the ultra-thin membrane having a substantial separation capability. The microporous substrate has micro pores of a uniform size or has micro pores of which the pore size is gradually enlarged from one surface to the other, and the pore size at the surface may preferably be not larger than 100 nm. Such a microporous substrate may be selected from commercially available materials such as "Millipore Filter VSWP" (trade name) commercially available from Millipore Co., Ltd. and "Ultrafilter UK10" (trade name) commercially available from Toyo Roshi Co., Ltd. The microporous substrate may usually be prepared in accordance with "Office of Saline Water Research and Development Progress Report" No. 359 (1968). As the material for forming the substrate, homopolymer or blended polymers of, for example, polysulfone, cellulose acetate, cellulose nitrate and polyvinyl chloride may be employed. Among these, polysulfone is most preferred since it has chemical, mechanical and thermal stability. For example, by casting a solution of this polysulfone in dimethylformamide (DMF) on a densely woven polyester cloth or a non-woven fabric to a prescribed thickness, and wet-coagulating the cast solution in an aqueous solution containing 0.5% by weight of sodium dodecyl sulfate and 2% by weight of DMF, a microporous substrate which has micro pores with diameters not larger than several tens nm throughout most of the area of the surface may be obtained.

The process of preparing the membrane will now be described.

In the first step, an aqueous solution containing piperazine and ethylenediamine (hereinafter referred to as "Composition (A)") is coated on the microporous substrate. The coating may be carried out by applying Composition (A) on the microporous substrate or by immersing the substrate in Composition (A).

The concentration of piperazine and ethylenediamine in Composition (A) is preferably 0.5 - 10% by weight. Since if the concentration is too small, defects are likely formed and if the concentration is too large, the water permeability of the composite semipermeable membrane is decreased, the concentration is more preferably 2 - 6% by weight. The ratio of piperazine to ethylenediamine in Composition (A) is so selected as to attain the molar ratio of the polyethylenediamine amide unit to the polypiperazine amide unit of not less than 0.01 and not more than 0.25. Thus, 0.007 - 0.17 parts by weight of ethylenediamine is contained in Composition (A) with respect to 1 part by weight of piperazine. As mentioned above, the salt rejection is lowered as the concentration of ethylenediamine is decreased, and the water permeability of the composite semipermeable membrane is decreased as the concentration of ethylenediamine is increased. Thus, the content of ethylenediamine is more preferably 0.05 - 0.1 part by weight with respect to 1 part by weight of piperazine.

By adding the compound represented by the formula [I] in Composition (A), the coating property and the water flux of the composite semipermeable membrane are promoted.

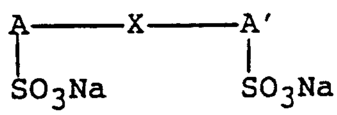

[I]

wherein each of A and A' represents a benzene or naphthalene ring which may have one or more alkyl group(s) and X represents -O- or $-CH_2-$.

The concentration of the compound represented by the formula [I] is not restricted. However, if too much is present in Composition (A), the active layer is likely to peel after formation of the membrane. Thus, the concentration of the compound of the formula [I] in Composition (A) is preferably not more than 1.0% by weight. Examples of the compound represented by the formula [I] include the following:

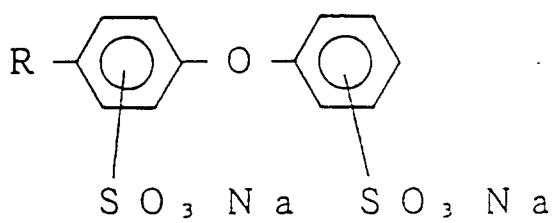

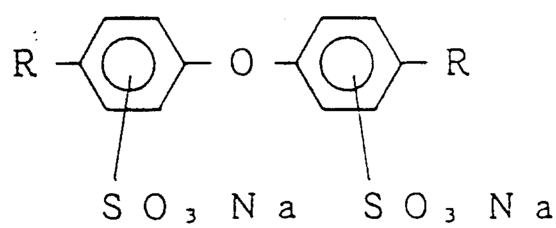

(wherein R represents a higher alkyl group such as $-C_{12}H_{25}$)

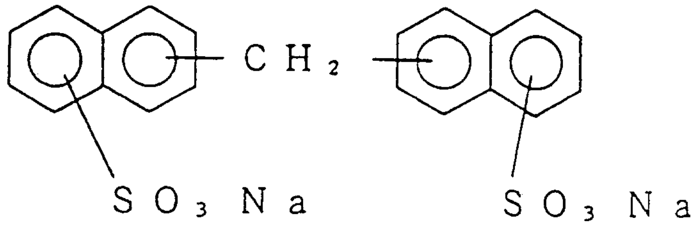

One or more alkyl group(s) other than the dodecyl group may exist. The above-described compounds may be employed individually or in combination.

Among the compounds represented by the formula [I], an example which gives the composite semipermeable membrane of highest performance is represented by the formula:

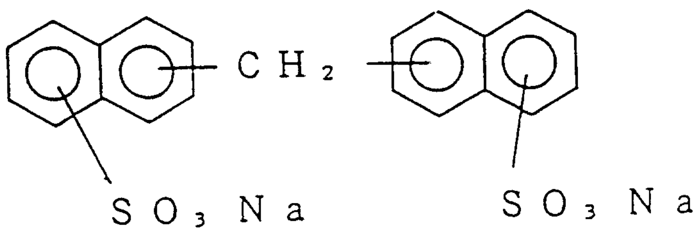

An alkaline metal compound may be added to Composition (A). This serves as a capturing agent for hydrochloric acid generated when the polycondensation reaction for forming the active layer occurs. Examples of the alkaline metal compound include hydroxides and weak acid salts of, for example, sodium or potassium. Trisodium phosphate is a preferred example.

Addition of a surfactant, especially an anionic surfactant to Composition (A) is effective for promoting the wetting property of Composition (A) so that it is uniformly coated on the microporous substrate when it is applied on the surface of the microporous substrate. The surfactant may be selected from sodium dodecyl sulfate, sodium alkylbenzenesulfonate and the like. Sodium alkyldiphenylether disulfonate having the above-described structure is preferred for giving good membrane performance. A water-soluble organic solvent which prevents the degradation of the microporous substrate may be added to Composition (A).

After coating the microporous substrate with Composition (A), a liquid-removing step is usually provided in order to remove excess Composition (A). The liquid-removing step may be carried out by holding the membrane vertically so as to allow the liquid to flow down naturally off the membrane surface or by blowing air onto the membrane surface.

The microporous substrate coated with Composition (A) is then dried in the air. This may be carried out by, for example, continuing to hold vertically the membrane after the removal of excess Composition (A). It is sufficient to dry the substrate to such a degree that aqueous solution (Composition (A)) is not observed on the microporous substrate. If there is a pool or drop of aqueous solution (Composition (A)), the active layer may be formed on the aqueous solution. Although drying by hot air may be carried out, if the drying is too severe, the reproducibility of the membrane performance may be reduced or the water permeability may be reduced, so that care should be taken. The temperature of the hot air may be 40 - 150°C. The drying time varies depending on the manner of drying. That is, since the drying rate differs depending on the manner of introducing heat and the type of the dryer, the drying time may be appropriately selected depending on these and may be 30 - 60 seconds.

In the next step, the solution containing as a major component the bifunctional halide in an organic solvent which is immiscible with water is applied so as to form the polyamide constituting the active layer by <u>in situ</u> interfacial polycondensation between the amines and the acid halide. After removing the excess acid halide solution in the organic solvent, the membrane is dried in the air at room temperature, thereby obtaining the composite semipermeable membrane.

Although the concentration of the acid halide is not restricted, if it is too small, the formation of the active layer made of the cross-linked polyamide may be insufficient, so that defects may be formed, and if it is too large, it is not economical. Thus, the concentration of the acid halide may preferably be 0.1 - 2.0% by weight.

In view of the interfacial polycondensation reaction rate, about 10 seconds are sufficient as the time for applying the acid halide solution in the organic solvent which is immiscible with water. However, in order to uniformly form the ultra-thin membrane (active layer), the time for applying the acid halide solution may preferably be not shorter than 30 seconds.

The organic solvent is required to be immiscible with water, to dissolve the acid halide, not to destroy the microporous substrate and to be able to form the cross-linked polyamide by the interfacial polycondensation reaction. Any organic solvent satisfying these requirements may be employed. Preferred examples of the organic solvent include hydrocarbons, cyclohexane, trichlorotrifluoroethane and the like. In view of the reaction rate and the volatility of the solvent, n-hexane and trichlorotrifluoroethane are preferred, and in view of the inflammability of the solvent, trichlorotrifluoroethane is most preferred.

Although the composite semipermeable membrane thus obtained may be used as it is, it is preferred to remove non-reacted components by washing the membrane with water.

The methods for measuring the characteristics concerning the present invention will now be described in summary.

i) Solute Rejection

When an aqueous solution containing a solute is passed through a membrane, the solute rejection is defined by the following equation:

$$\text{Solute Rejection (\%)} = 1 - \frac{Y}{X} \times 100$$

wherein X represents the concentration of solute in the supplied liquid and Y represents the concentration of the solute in the permeate. The salt concentration of the solution was determined by measuring the electroconductivity of the solution and the concentration of an organic substance was determined by using a differential refractometer or TOC meter.

ii) Water Flux (Rate of Water Permeation)

Water flux was measured by measuring the weight of water which passed through the membrane at 25°C. The water flux indicates the amount of water ($m^3$) which passed through the membrane per 1 $m^2$ of the membrane per day.

Reference Example

On taffeta sizing 30 cm length x 20 cm width consisting of polyester fibers (both of the warp and weft are multifilament yarn of 150 denier (136 dtex), warp density: 90 warps/inch (35.4 warps/cm), weft density: 67 wefts/inch (26.4 wefts/cm), 160 μm thickness), which was fixed on a glass plate, 15% by weight solution of polysulfone (Udel®-P3500 commercially available from Union Carbide) in dimethylformamide (DMF) was cast at room temperature (20°C) to a thickness of 200 μm. The resultant was immediately immersed in pure water and was left to stand for 5 minutes to prepare a fiber-reinforced polysulfone substrate (hereinafter referred to as "FR-PS substrate" for short). The thus obtained FR-PS substrate (210 - 215 μm) had a pure water permeation coefficient of 0.05 - 0.01 $g/cm^2 \cdot sec \cdot atm$ (98 Pa.sec. 98 kPa) measured under a pressure of 1 $kg/cm^2$ (98 kPa) at 25°C.

Example 1

On the FR-PS substrate, a composition containing 2.0% by weight of piperazine, 0.2% by weight of ethylenediamine, 0.1% by weight of sodium dodecyldiphenylether disulfonate and 1.0% by weight of trisodium phosphate was applied for 1 minute. The substrate was vertically held so as to remove the excess aqueous solution and then dried at 70°C for 30 seconds. Then a solution containing 0.18% by weight of isophthalic acid chloride and 0.12% by weight of trimesic acid chloride in trichlorotrifluoroethane was applied to the substrate such that the surface of the substrate is completely wetted and the substrate was kept in this state for 1 minute. The membrane was then vertically held so as to remove the excess solution, and then sufficiently washed with water.

The thus obtained composite semipermeable membrane was subjected to a reverse osmosis test using 500 ppm aqueous sodium chloride solution of which pH was adjusted to 6.5 as the supplied liquid under a pressure of 15 $kg/cm^2$ (1470 kPa) at 25°C.

As a result, the membrane showed a salt rejection of 97.6% and water flux (rate of water permeation) of 1.15 $m^3/m^2 \cdot day$.

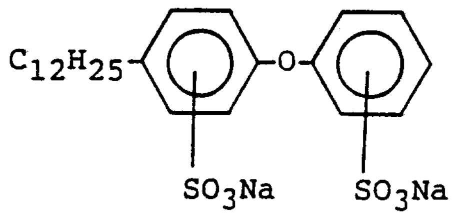

Sodium Dodecyldiphenylether Disulfonate

Example 2

A composite semipermeable membrane was prepared in the same manner as in Example 1 except that the concentration of ethylenediamine in the composition was 0.1% by weight. The thus obtained composite semipermeable membrane was subjected to a reverse osmosis test using 500 ppm aqueous sodium chloride solution of which pH was adjusted to 6.5 as the supplied liquid under a pressure of 15 kg/cm$^2$ (1470 kPa) at 25°C. As a result, the membrane showed a salt rejection of 97.0% and water flux of 1.60 m$^3$/m$^2$ • day.

Example 3

A composite semipermeable membrane was prepared in the same manner as in Example 2 except that methylene-bis-(sodium naphthalene sulfonate) represented by the formula below was used in place of sodium dodecyldiphenylether disulfonate. The thus obtained composite semipermeable membrane was subjected to a reverse osmosis test using 500 ppm aqueous sodium chloride solution of which pH was adjusted to 6.5 as the supplied liquid under a pressure of 15 kg/cm$^2$ (1470 kPa) at 25°C. As a result, the membrane showed a salt rejection of 97.3% and water flux of 1.45 m$^3$/m$^2$ • day.

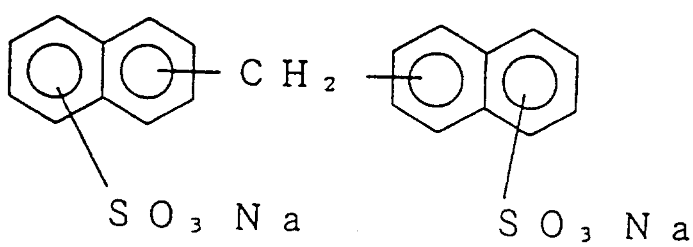

Example 4

On the FR-PS substrate, a composition containing 2.0% by weight of piperazine, 0.1% by weight of ethylenediamine, 0.1% by weight of methylene-bis-(sodium naphthalenesulfonate), 0.04% by weight of sodium dodecyldiphenylether sulfonate and 1.0% by weight of trisodium phosphate was applied for 1 minute. The substrate was vertically held so as to remove the excess aqueous solution and then dried at 80°C for 30 seconds. Then a solution containing 0.30% by weight of isophthalic acid chloride and 0.20% by weight of trimesic acid chloride in trichlorotrifluoroethane was applied to the substrate such that the surface of the substrate is completely wetted and the substrate was kept in this state for 1 minute. The membrane was then vertically held so as to remove the excess solution, and then sufficiently washed with water.

The thus obtained composite semipermeable membrane was subjected to a reverse osmosis test using 500 ppm aqueous sodium chloride solution of which pH was adjusted to 6.5 as the supplied liquid under a pressure of 15 kg/cm$^2$ (1470 kPa) at 25°C.

As a result, the membrane showed a salt rejection of 97.2% and water flux of 1.48 m$^3$/m$^2$ • day.

Comparative Example 1

Using a composition containing 2.0% by weight of piperazine, 0.1% by weight of sodium dodecyldiphenylether disulfonate and 1.0% by weight of trisodium phosphate, and a solution containing 0.30% by weight of isophthalic acid chloride and 0.20% by weight of trimesic acid chloride, a composite semipermeable membrane was prepared in the same manner as in Example 1. The thus obtained composite semipermeable membrane was subjected to a reverse osmosis test using 500 ppm aqueous sodium chloride solution of which pH was adjusted to 6.5 as the supplied liquid under a pressure of 15 $kg/cm^2$ (1470 kPa) at 25°C. As a result, the membrane showed a salt rejection of 89.0% and water flux of 1.58 $m^3/m^2 \cdot day$.

Examples 5 - 7

Composite semipermeable membranes were prepared in the same manner as in Example 4 except that the substrate was dried at 70°C, 90°C or 100°C after removing the excess composition applied on the substrate. The thus obtained composite semipermeable membranes were subjected to a reverse osmosis test using 500 ppm aqueous sodium chloride solution of which pH was adjusted to 6.5 as the supplied liquid under a pressure of 15 $kg/cm^2$ (1470 kPa) at 25°C. The membranes had performances shown in Table 1.

Examples 8 and 9

Semipermeable composite membranes were prepared as in Example 4 except that the total concentration of isophthalic acid chloride and trimesic acid chloride was 0.3% by weight or 1.0% by weight, without changing the ratio of these compounds. The thus obtained composite semipermeable membranes were subjected to a reverse osmosis test using 500 ppm aqueous sodium chloride solution of which pH was adjusted to 6.5 as the supplied liquid under a pressure of 15 $kg/cm^2$ (1470 kPa) at 25°C. The membranes had performances shown in Table 2.

Examples 10 and 11

Composite semipermeable membranes were prepared as in Example 4 except that the concentrations of the solutes in the composition were respectively twice or three times those contained in the composition used in Example 4. The thus obtained composite semipermeable membranes were subjected to a reverse osmosis test using 500 ppm aqueous sodium chloride solution of which pH was adjusted to 6.5 as the supplied liquid under a pressure of 15 $kg/cm^2$ (1470 kPa) at 25°C. The membranes had performances shown in Table 3.

Example 12, Comparative Example 2

Composite semipermeable membranes were prepared in the same manner as in Example 4 except that the concentration of ethylenediamine was 0.2% by weight or 0.4% by weight. The thus obtained composite semipermeable membranes were subjected to a reverse osmosis test using 500 ppm aqueous sodium chloride solution of which pH was adjusted to 6.5 as the supplied liquid under a pressure of 15 $kg/cm^2$ (1470 kPa) at 25°C. The membranes had performances as shown in Table 4.

Examples 13 and 14

Composite semipermeable membranes were prepared as in Example 4 except that the time for retaining the substrate after application of the solution containing isophthalic acid chloride and trimesic acid chloride in trichlorotrifluoroethane was 10 seconds or 60 seconds. The thus obtained composite semipermeable membranes were subjected to a reverse osmosis test using 500 ppm aqueous sodium chloride solution of which pH was adjusted to 6.5 as the supplied liquid under a pressure of 15 $kg/cm^2$ (1470 kPa) at 25°C. The membranes had performances shown in Table 5.

Examples 15 and 16

Composite semipermeable membranes were prepared as in Example 4 except that the concentration of sodium dodecyldiphenylether disulfonate was 0.02% by weight or 0.08% by weight. The thus obtained composite semipermeable membranes were subjected to the reverse osmosis test as described above. The membranes had performances shown in Table 6.

Example 17

The composition used in Example 3 was applied on the FR-PS substrate for 1 minute. After removing excess aqueous solution from the surface of the substrate by vertically holding the substrate, the substrate was dried at 70°C for 30 seconds. Then a solution containing 0.4% by weight of isophthalic acid chloride and 0.1% by weight of trimesic acid chloride in trichlorotrifluoroethane was applied to the substrate such that the surface of the substrate is completely wetted and the substrate was kept in this state for 1 minute. The membrane was then vertically held so as to remove the excess solution, and then sufficiently washed with water. The thus obtained composite semipermeable membrane was subjected to the reverse osmosis test as described above. As a result, the membrane showed a salt rejection of 94.3% and water flux of 1.72 $m^3/m^2 \cdot$ day.

Example 18

Using the composition used in Example 4 and a solution containing 0.275% by weight of isophthalic acid chloride and 0.225% by weight of trimesic acid chloride in trichlorotrifluoroethane, a composite semipermeable membrane was prepared in the same manner as in Example 4. The thus obtained composite semipermeable membrane was subjected to the reverse osmosis test as described above. As a result, the membrane showed a salt rejection of 97.8% and water flux of 1.22 $m^3/m^2 \cdot$ day.

Comparative Example 3

The microporous substrate was immersed in a composition containing 2.0% by weight of piperazine, 1.2% by weight of ethylenediamine and 1.0% by weight of trisodium phosphate. The microporous support was gently drawn and a solution containing 0.5% by weight of isophthalic acid chloride in trichlorotrifluoroethane was applied to the substrate such that the surface of the substrate is completely wetted and the substrate was kept in this state for 1 minute. The membrane was then vertically held so as to remove the excess solution, and then sufficiently washed with water. The thus obtained composite semipermeable membrane was subjected to a reverse osmosis test using 500 ppm aqueous sodium chloride solution of which pH was adjusted to 6.5 as the supplied liquid under a pressure of 15 $kg/cm^2$ (1470 kPa) at 25°C. As a result, the membrane showed a salt rejection of 98.6% and water flux of 0.30 $m^3/m^2 \cdot$ day.

Example 19

The composite semipermeable membrane prepared in Example 4 was subjected to reverse osmosis tests in which 1500 ppm of magnesium chloride, 2000 ppm of magnesium sulfate and 2000 ppm of sodium sulfate, each of which pH was adjusted to 6.5, were used as the supplied liquid in addition to the aqueous sodium chloride solution under a pressure of 15 $kg/cm^2$ (1470 kPa)at 25°C. The measured performances are shown in Table 7.

Example 20

The composite semipermeable membrane prepared in Example 4 was subjected to reverse osmosis tests in which 1000 ppm of isopropanol and 1000 ppm of raffinose, each of which pH was adjusted to 6.5, were used as the supplied liquid. As a result, the membranes showed solute rejections of 82% and 99.9%, respectively.

Example 21

The composite semipermeable membrane prepared in Example 4 was subjected to the reverse osmosis test under the same conditions as in Example 4 except that the residual chlorine concentration in the supplied liquid was 10 ppm by adding thereto sodium hypochlorite, the pH of the supplied liquid being adjusted to 6.5. The test was run for 600 hours. The salt rejections and water flux before and after addition of chlorine were 97.8% and 98.4%, and 1.29 $m^3/m^2 \cdot$ day and 1.23 $m^3/m^2 \cdot$ day, respectively. Then the concentration of the residual chlorine was increased to 100 ppm and the operation was continued for another 60 hours. The salt rejection after this operation was 98.3% and the water flux was 1.23 $m^3/m^2 \cdot$ day. Thus, the degradation of the membrane performance did not occur, so that it was proved that this membrane had a good chlorine resistance.

Example 22

Using 2.0% aqueous hydrogen peroxide solution, pH 6.5, as a supplied liquid, reverse osmosis was carried out under a pressure of 3 $kg/cm^2$ (294 kPa) at 25°C for 60 hours using the membrane prepared in Example 4, thereby carrying out a hydrogen peroxide resistance test. The salt rejections and water flux measured before and after the hydrogen peroxide resistance test under a pressure of 10 kg/cm$^2$ (980 kPa) at 25°C using 500 ppm of aqueous sodium chloride solution, pH 6.5, were 97.6% and 97.5%, and 1.28 m$^3$/m$^2$ • day and 1.30 m$^3$/m$^2$ • day, respectively. Thus, the membrane showed good resistance to hydrogen peroxide.

Example 23

The membrane prepared in Example 4 was cut into pieces of an appropriate size. The pieces were immersed in methylene chloride so as to peel off the ultra-thin membranes, and the ultra-thin membranes were collected by filtration under suction using a glass filter.

The thus obtained sample was analyzed by C$^{13}$-NMR spectrum analysis. As a result, the molar ratio of the unit originating from isophthalic acid to the unit originating from trimesic acid was 41:59, which corresponds well to the molar ratio of 39:61, which is the molar ratio in the solution in trichlorotrifluoroethane.

Table 1

| | Drying Temperature (°C) | Solute Rejection (%) | Water Flux (m$^3$/m$^2$ • day) |
|---|---|---|---|
| Example 5 | 70 | 97.5 | 1.50 |
| Example 4 | 80 | 97.2 | 1.48 |
| Example 6 | 90 | 97.0 | 1.52 |
| Example 7 | 100 | 97.6 | 1.47 |

Table 2

| | Concentration of Acid Chloride (wt%) | Solute Rejection (%) | Water Flux (m$^3$/m$^2$ • day) |
|---|---|---|---|
| Example 8 | 0.3 | 96.5 | 1.50 |
| Example 4 | 0.5 | 97.2 | 1.48 |
| Example 9 | 1.0 | 98.3 | 0.80 |

Table 3

| | Concentration of Composition | Solute Rejection (%) | Water Flux (m$^3$/m$^2$ • day) |
|---|---|---|---|
| Example 4 | - | 97.2 | 1.48 |
| Example 10 | Twice that in Example 4 | 98.2 | 1.00 |
| Example 11 | Triple that in Example 4 | 98.0 | 0.80 |

Table 4

| | Piperazine/Ethylenediamine (wt%) | Solute Rejection (%) | Water Flux ($m^3/m^2 \cdot day$) |
|---|---|---|---|
| Example 4 | 2.0/0.1 | 97.2 | 1.48 |
| Example 12 | 2.0/0.2 | 97.8 | 1.00 |
| Comparative Example 2 | 2.0/0.4 | 98.6 | 0.38 |

Table 5

| | Time for Application (seconds) | Solute Rejection (%) | Water Flux ($m^3/m^2 \cdot day$) |
|---|---|---|---|
| Example 13 | 10 | 96.3 | 1.80 |
| Example 14 | 20 | 96.8 | 1.64 |
| Example 4 | 60 | 97.2 | 1.48 |

Table 6

| | Sodium Dodecyldiphenylether Disulfonate (wt%) | Solute Rejection (%) | Water Flux ($m^3/m^2 \cdot day$) |
|---|---|---|---|
| Example 15 | 0.02 | 96.8 | 1.48 |
| Example 4 | 0.04 | 97.2 | 1.48 |
| Example 16 | 0.08 | 96.7 | 1.50 |

Table 7

| | Sodium Chloride 500 ppm | Magnesium Chloride 1500 ppm | Sodium Sulfate 2000 ppm | Magnesium Sulfate 2000 ppm |
|---|---|---|---|---|
| Solute Rejection (%) | 97.8 | 98.0 | 99.9 | 99.9 |

The composite semipermeable membrane of the present invention is a reverse osmosis membrane having good chlorine resistance, which exhibits a high salt rejection and sufficient water flux even under a low pressure. Thus, the composite semipermeable membrane of the present invention may be used in wide variety of fields such as in small equipment such as small ultra-pure water-producing machines and domestic water purifiers in which tapped water is used as the supplied water, and in the field of waste water treatment.

## Claims

1. A composite semipermeable membrane comprising a microporous substrate and an ultra-thin membrane coated on the microporous substrate, the ultra-thin membrane comprising as a major constituent a polyamide prepared by polycondensation of piperazine and ethylenediamine with a bifunctional aromatic acid halide, the molar ratio of the ethylenediamine polyamide unit to the piperazine polyamide unit being hot less than 0.01:1 and less than 0.25:1, the composite semipermeable membrane having a water flux of not less than 0.8 $m^3/m^2$.day and not more than 1.8

$m^3/m^2$.day at an operation pressure of 15 $kg/cm^2$ (1470 kPa) and a salt rejection for 0.05% by weight aqueous sodium chloride solution of not less than 90% and not more than 99%.

**2.** A composite semipermeable membrane according to claim 1, wherein the polyamide is cross-linked by a trifunctional acid halide.

**3.** A composite semipermeable membrane according to claim 1 or 2, wherein the ultra-thin membrane has a thickness of 10 - 300 nm.

**4.** A composite semipermeable membrane according to claim 1, 2 or 3, wherein the microporous substrate is made of a polysulfone.

**5.** A composite semipermeable membrane according to any preceding claim, wherein the bifunctional aromatic acid halide is at least one of terephthalic acid halide and isophthalic acid halide.

**6.** A composite semipermeable membrane according to any one of claims 2 to 5, wherein the trifunctional acid halide is trimesoyl halide.

**7.** A composite semipermeable membrane according to any preceding claim, wherein the molar ratio of the polyethylene-diamine polyamide unit to the piperazine polyamide unit is not more than 0.14:1.

**8.** A process of producing the composite semipermeable membrane of claim 1, comprising the steps of

applying onto the microporous substrate an aqueous solution containing piperazine, ethylenediamine and a compound [I] represented by the formula [I],

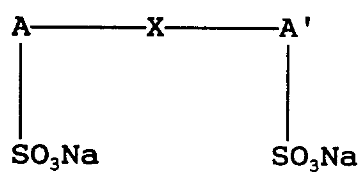

[I]

wherein each of A and A' represents a benzene or naphthalene ring which may have, substituted thereon, one or more alkyl group(s) and X represents -O- or $-CH_2-$, the aqueous solution containing 0.007 to 0.17 parts by weight of ethylenediamine per 1 part by weight of piperazine and not less than 0.01% and not more than 1.0%, by weight of the aqueous solution, of the compound [I]; and

applying thereon an organic solvent solution containing as a major solute component the bifunctional aromatic acid halide, which organic solvent is immiscible with water, so as to allow an interfacial polycondensation reaction between the said amino compounds and the bifunctional aromatic acid halide, thereby forming the said polyamide serving as an active layer.

**9.** A process according to claim 8, wherein the total concentration of piperazine and ethylenediamine in the aqueous solution thereof is 0.5-10% by weight.

**10.** A process according to claim 9, wherein the total concentration of piperazine and ethylenediamine in the aqueous solution thereof is 2-6% by weight.

**11.** A process according to claim 8, 9 or 10, wherein the bifunctional aromatic acid halide is selected from terephthalic acid halide and isophthalic acid halide.

**12.** A process according to any one of claims 8 to 11, wherein the organic solvent solution containing as a major solute component the bifunctional aromatic acid halide further contains a trimesoyl halide.

**13.** A process according to any one of claims 8 to 12, wherein the concentration of the bifunctional aromatic acid halide in the organic solvent solution thereof is 0.1-2.0% by weight.

**14.** A process according to any one of claims 8 to 13, wherein the microporous substrate is made of a polysulfone.

**15.** A process according to any one of claims 8 to 14, wherein the aqueous solution containing piperazine and ethylenediamine further contains an anionic surfactant.

**16.** A process according to any one of claims 8 to 15, wherein the compound represented by the formula [I] has the formula:

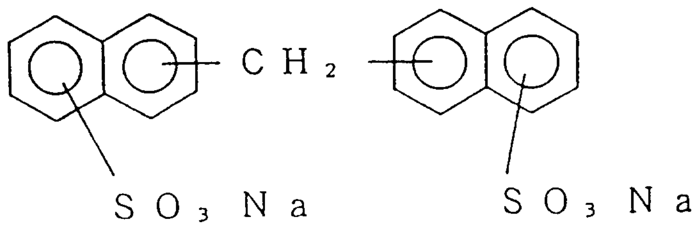

## Patentansprüche

**1.** Halbdurchlässige Verbundmembran, umfassend ein mikroporöses Substrat und eine auf das mikroporöse Substrat aufgetragene ultradünne Membran, wobei die ultradünne Membran als Hauptbestandteil ein Polyamid umfaßt, das durch Polykondensation von Piperazin und Ethylendiamin mit einem bifunktionalen aromatischen Säurehalogenid hergestellt ist, wobei das Molverhältnis zwischen der Ethylendiaminpolyamideinheit und der Piperazinpolyamideinheit nicht weniger als 0,01:1 und weniger als 0,25:1 ist, wobei die halbdurchlässige Verbundmembran eine Wasserdurchlaßmenge von nicht weniger als 0,8 $m^3/m^2$.Tag und nicht mehr als 1,8 $m^3/m^2$.Tag bei einem Betriebsdruck von 15 $kg/cm^2$ (1470 kPa) und eine Salzrückhaltung für eine wäßrige 0,05 Gew.-%-ige Natriumchloridlösung von nicht weniger als 90% und nicht mehr als 99% aufweist.

**2.** Halbdurchlässige Verbundmembran nach Anspruch 1, worin das Polyamid durch ein trifunktionales Säurehalogenid vernetzt ist.

**3.** Halbdurchlässige Verbundmembran nach Anspruch 1 oder 2, worin die ultradünne Membran eine Dicke von 10-300 nm aufweist.

**4.** Halbdurchlässige Verbundmembran nach Anspruch 1, 2 oder 3, worin das mikroporöse Substrat aus einem Polysulfon besteht.

**5.** Halbdurchlässige Verbundmembran nach einem der vorangegangenen Ansprüche, worin das bifunktionale aromatische Säurehalogenid zumindest eines aus Terephthalsäurehalogenid und Isophthalsäurehalogenid ist.

**6.** Halbdurchlässige Verbundmembran nach einem der Ansprüche 2 bis 5, worin das trifunktionale Säurehalogenid Trimesinsäurehalogenid ist.

**7.** Halbdurchlässige Verbundmembran nach einem der vorangegangenen Ansprüche, worin das Molverhältnis zwischen der Polyethylendiaminpolyamideinheit und der Piperazinpolyamideinheit nicht größer als 0,14:1 ist.

**8.** Verfahren zur Herstellung der halbdurchlässigen Verbundmembran nach Anspruch 1, folgende Schritte umfassend:

das Auftragen einer wäßrigen Lösung auf das mikroporöse Substrat, die Piperazin, Ethylendiamin und eine Verbindung [I] der Formel [I] enthält,

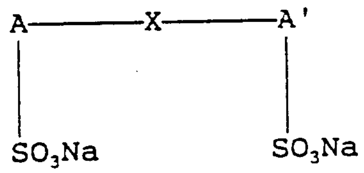

[I]

worin jedes aus A und A' einen Benzol- oder Napthalinring darstellt, der darauf substituiert eine oder mehrere Alkylgruppe(n) aufweisen kann, und X -O- oder $-CH_2-$ darstellt, wobei die wäßrige Lösung 0,007 bis 0,17 Gewichtsteile Ethylendiamin pro 1 Gewichtsteil Piperazin und nicht weniger als 0,01 Gew.-% und nicht mehr als 1,0 Gew.-% der wäßrigen Lösung an Verbindung [I] enthält;

das Auftragen darauf einer organischen Lösungsmittel lösung, die als gelöste Hauptkomponente das bifunktionale aromatische Säurehalogenid enthält, welches organische Lösungsmittel mit Wasser unmischbar ist, sodaß eine Grenzflächenpolykondensationsreaktion zwischen den Aminoverbindungen und dem bifunktionalen aromatischen Säurehalogenid zugelassen wird, wodurch das Polyamid, das als aktive Schicht dient, gebildet wird.

**9.** Verfahren nach Anspruch 8, worin die Gesamtkonzentration an Piperazin und Ethylendiamin in deren wäßriger Lösung 0,5-10 Gew.-% ausmacht.

**10.** Verfahren nach Anspruch 9, worin die Gesamtkonzentration an Piperazin und Ethylendiamin in deren wäßriger Lösung 2-6 Gew.-% ausmacht.

**11.** Verfahren nach Anspruch 8, 9 oder 10, worin das bifunktionale aromatische Säurehalogenid aus Terephthalsäurehalogenid und Isophthalsäurehalogenid ausgewählt ist.

**12.** Verfahren nach einem der Ansprüche 8 bis 11, worin die organische Lösungsmittel lösung, die als gelöste Hauptkomponente das bifunktionale aromatische Säurehalogenid enthält, weiters ein Trimesinsäurehalogenid enthält.

**13.** Verfahren nach einem der Ansprüche 8 bis 12, worin die Konzentration des bifunktionalen aromatischen Säurehalogenids in dessen organischer Lösungsmittellösung 0,1-2,0 Gew.-% ist.

**14.** Verfahren nach einem der Ansprüche 8 bis 13, worin das mikroporöse Substrat aus einem Polysulfon besteht.

**15.** Verfahren nach einem der Ansprüche 8 bis 14, worin die Piperazin und Ethylendiamin enthaltende wäßrige Lösung weiters ein anionisches Tensid enthält.

**16.** Verfahren nach einem der Ansprüche 8 bis 15, worin die Verbindung der Formel [I] die Formel:

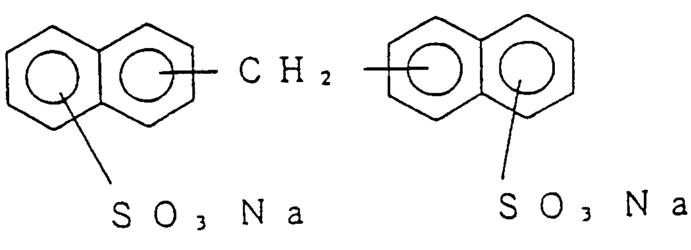

aufweist.

## Revendications

**1.** Membrane semi-perméable composite comprenant un substrat microporeux et une membrane ultra-mince enduite sur le substrat microporeux, la membrane ultra-mince comprenant comme constituant majeur un polyamide préparé par polycondensation de pipérazine et d'éthylènediamine avec un halogénure d'acide aromatique bifonctionnel, le rapport molaire de l'unité d'éthylènediamine polyamide à l'unité de pipérazine polyamide n'étant pas plus petit que 0,01:1 et plus petit que 0,25:1, la membrane semi-perméable composite ayant un flux d'eau de pas moins de 0,8 $m^3/m^2$. jour et pas plus de 1,8 $m^3/m^2$. jour à une pression de fonctionnement de 15 $kg/cm^2$ (1450 kPa) et un rejet de sel pour une solution aqueuse à 0,05 % en poids de chlorure de sodium de pas moins de 90 % et pas plus de 99 %.

2. Membrane semi-perméable composite selon la revendication 1 où le polyamide est réticulé par un halogénure d'acide trifonctionnel.

3. Membrane semi-perméable composite selon la revendication 1 ou 2, où la membrane ultra-mince a une épaisseur de 10 - 300 nm.

4. Membrane semi-perméable composite selon la revendication 1, 2 ou 3, où le substrat microporeux est fait d'une polysulfone.

5. Membrane semi-perméable composite selon l'une quelconque des revendications précédentes où l'halogénure d'acide aromatique bifonctionnel est au moins l'un d'un halogénure d'acide téréphtalique et d'un halogénure d'acide isophtalique.

6. Membrane semi-perméable composite selon l'une quelconque des revendications 2 à 5, où l'halogénure d'acide trifonctionnel est l'halogénure de trimésoyle.

7. Membrane semi-perméable composite selon l'une des revendications précédentes où le rapport molaire de l'unité de polyéthylène-diamine polyamide à l'unité de pipérazine polyamide ne dépasse pas 0,14:1.

8. Procédé de production de la membrane semi-perméable composite de la revendication 1, comprenant les étapes de :

   appliquer sur le substrat microporeux une solution aqueuse contenant de la pipérazine, de l'éthylènediamine et un composé [I] représenté par la formule [I],

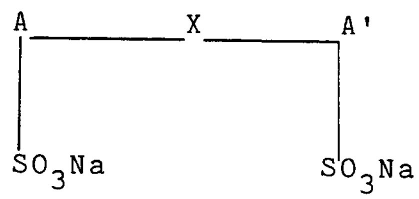

[I]

   où chacun de A et A' représente un cycle de benzène ou de naphtalène qui peut avoir, substitué, un ou plusieurs groupes alkyles et X représente -O- ou $-CH_2-$, la solution aqueuse contenant 0,007 à 0,17 partie en poids d'éthylènediamine pour une partie en poids de pipérazine et pas moins de 0,01 % et pas plus de 1,0 % en poids de la solution aqueuse, du composant [I]; et

   appliquer par-dessus une solution d'un solvant organique contenant, comme composant majeur du soluté, l'halogénure d'acide aromatique bifonctionnel, lequel solvant organique est immiscible avec l'eau, afin de permettre une réaction de polycondensation interfaciale entre lesdits composés amino et l'halogénure d'acide aromatique bifonctionnel, pour ainsi former ledit polyamide servant de couche active.

9. Procédé selon la revendication 8, où la concentration totale de la pipérazine et de l'éthylènediamine dans la solution aqueuse est de 0,5-10 % en poids.

10. Procédé selon la revendication 9, où la concentration totale de la pipérazine et de l'éthylènediamine dans la solution aqueuse est de 2-6 % en poids.

11. Procédé selon la revendication 8, 9 ou 10, où l'halogénure d'acide aromatique bifonctionnel est sélectionné parmi l'halogénure d'acide téréphtalique et l'halogénure d'acide isophtalique.

12. Procédé selon l'une quelconque des revendications 8 à 11, où la solution du solvant organique contenant, comme

composant majeur du soluté, l'halogénure d'acide aromatique bifonctionnel, contient de plus un halogénure de trimésoyle.

13. Procédé selon l'une quelconque des revendications 8 à 12, où la concentration de l'halogénure d'acide aromatique bifonctionnel dans sa solution d'un solvant est organique de 0,1-2,0 % en poids.

14. Procédé selon l'une quelconque des revendications 8 à 13, où le substrat microporeux est fait d'une polysulfone.

15. Procédé selon l'une quelconque des revendications 8 à 14, où la solution aqueuse contenant de la pipérazine et de l'éthylènediamine contient de plus un agent tensio-actif anionique.

16. Procédé selon l'une quelconque des revendications 8 à 15, où le composé représenté par la formule a [I] pour formule :